# FASCICULE DE BREVET EUROPEEN

(11) **EP 2 274 157 B1**
(45) Date de publication et mention de la délivrance du brevet: **07.11.2012**
(21) Numéro de dépôt: 09726976.5
(22) Date de dépôt: 30.03.2009
(51) Int. Cl.: B29C 47/88, B29D 30/16, B29D 30/30

(54) **BUSE COMPRENANT UNE PALETTE D'APPLIQUE ARTICULÉE**
MIT EINER ANWENDUNGSPALETTE VERBUNDENE DÜSE
NOZZLE INCLUDING A JOINTED APPLICATION PALLET

(30) Priorité: 02.04.2008 FR 0852163
(43) Date de publication de la demande: 19.01.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DELORME, Jean-Claude, 63730 Mirefleurs (FR); OUGIER, Christophe, 63450 Le Crest (FR)
(74) Mandataire: Reynaud, Georges
(86) Numéro de dépôt international: PCT/EP2009/053718
(87) Numéro de publication internationale: WO 2009/121825

(56) Documents cités:
- EP-A- 0 410 852
- EP-A- 1 749 648
- EP-A- 1 754 592
- WO-A-2004/028779
- US-A- 3 579 734
- US-A- 4 076 569
- US-A1- 2005 249 877

## Description

L'invention concerne le domaine de la fabrication des produits à base de matériau viscoélastiques tels que des matériaux plastiques ou élastomériques.

Plus particulièrement, l'invention s'intéresse au domaine de la pose de profilés sous forme de bandelettes superposées les unes sur les autres selon un pas et un taux de recouvrement déterminés en fonction du profil final que l'on cherche à obtenu.

Typiquement, ce type de pose bien connu est utilisé dans la fabrication d'une ébauche de pneumatique, au cours de laquelle on enroule une bandelette d'un produit de nature caoutchoutique autour d'une surface de réception de forme cylindrique ou toroïdale et selon un pas bien précis, de manière à former, par superposition des couches de bandelettes d'une même qualité, un profilé de gomme d'une qualité donnée et disposé de manière précise en fonction de la place occupée par ce profilé dans le pneumatique.

Les moyens d'assemblage et les dispositifs connus comprennent en règle générale trois types de moyens fonctionnant en collaboration les uns avec les autres :
- une surface de réception,
- un moyen d'alimentation permettant de générer une bandelette selon une géométrie définie,
- un moyen d'application de la bandelette sur une surface de réception et,
- un moyen de pilotage des déplacements du moyen d'application par rapport à la surface de réception.

A titre d'exemple, les dispositifs décrits dans les publications EP 268 544 ou encore dans la publication EP 264 600 décrivent l'ensemble des moyens évoqués ci-dessus.

Les dispositifs de ce type permettent de s'affranchir des étapes de fabrication desdits profilés, lesquelles s'effectuent généralement à partir de moyens de fabrication centralisés. En effet, la bandelette est produite à la demande au moment de l'assemblage. Pour un profil de bandelette donné, le profil définitif déposé sur la surface de réception dépend seulement de l'algorithme utilisé pour piloter le moyen d'application et de la section de la bandelette. Aussi, la souplesse d'utilisation de ces procédés est à l'origine de leur grande diffusion.

La mise en oeuvre de ce type de procédé repose essentiellement sur la qualité du moyen de génération de la bandelette. Il importe en effet que la section de la bandelette soit aussi proche que possible de la référence désirée, de manière à ce que la quantité de matériau déposé corresponde précisément à la quantité attendue.

A cet effet, il a été développé des moyens de génération de profilés de gomme permettant de fournir un débit rigoureusement constant. Ce type de moyen est décrit à titre d'exemple dans la publication EP 0 400 496 A1 de la demanderesse.

D'autre part, la forme du profil doit être judicieusement choisie pour permettre une mise en joint aussi parfaite que possible des couches de bandelettes les unes avec les autres, dans le but d'éviter, autant que faire se peut, l'inclusion d'air entre les couches de bandelette dont la présence serait préjudiciable à la résistance du pneumatique au cours de son utilisation.

Aussi, il a été proposé de réaliser des bandelettes de section sensiblement lenticulaires de manière à éviter les effets de bord.

Enfin, pour que la qualité de dépose de la bandelette soit optimale, et pour faciliter l'application et la mise en joint de la bandelette sur la surface de réception, il importe que le moyen d'application soit disposé au plus près de la surface de réception.

Le document EP 1749648 - A se réfère à un dispositif d'application d'une bandelette d'un matériau viscoélastique sur une surface de réception en mouvement relatif par rapport au dit dispositif, comprenant un moyen d'alimentation et une buse d'application à l'extrémité de laquelle est disposé un orifice de sortie, ledit orifice de sortie comportant une lèvre avant et une lèvre arrière, le dispositif comprenant une languette qui exerce une pression sur le dos de la bandelette dans le but de faire adhérer cette dernière sur la surface de réception. Ladite languette est montée sur un levier qui est séparé de la buse d'application.

Les dispositifs connus disposent de moyens permettant d'approcher de la surface de réception l'ensemble composé des moyens d'alimentation qui sont solidaires des moyens d'application. La masse de l'ensemble de ces moyens est relativement élevée. Il en résulte qu'il s'avère difficile de piloter de manière fine et précise la position du moyen d'application par rapport à la surface de réception, de sorte que le moyen d'application puisse épouser toutes les irrégularités de la surface de réception. Aussi, de manière connue,
il est proposé de disposer un rouleau d'application en aval du moyen d'application pour parfaire la mise en joint de la bandelette sur la surface de réception. Un dispositif de ce type est divulgué à titre d'exemple dans la publication EP 264 600 déjà évoquée ci-dessus. Ce rouleau d'application exerce une pression contrôlée au point de mise en contact de la bandelette sur la surface de réception.

Toutefois, on observe que ce rouleau, qui est en règle générale embarqué sur le moyen d'application, représente une source de problèmes. Il arrive en effet, que la bandelette adhère à la surface du rouleau, ou encore qu'elle s'échappe par l'espace libre situé entre l'orifice de sortie de la buse et le rouleau d'application. Ces anomalies entraînent une interruption du cycle de pose, et une déformation voire une rupture de la bandelette.

L'invention a pour objet de supprimer ces inconvénients.

Selon l'invention, le dispositif comme défini dans la revendication 1, pour l'application d'une bandelette d'un matériau viscoélastique sur une surface de réception en mouvement relatif par rapport au dit dispositif comprend un moyen d'alimentation et une buse d'application à l'extrémité de laquelle est disposé un orifice de sortie, ledit orifice de sortie comportant une lèvre avant et une lèvre arrière.

Le dispositif selon l'invention se caractérise en ce que la lèvre arrière est reliée à une palette d'applique par l'intermédiaire d'une articulation élastique, de sorte que, lorsque le dispositif est en fonctionnement, ladite palette exerce une pression sur le dos de la bandelette dans le but de faire adhérer cette dernière sur la surface de réception.

De cette manière il n'y a aucun espace libre entre la lèvre arrière de la buse et le dispositif d'application. La tension de l'articulation élastique permet d'exercer une force d'applique sur la bandelette, et favorise ainsi son adhésion sur la surface de réception.

De plus, la palette d'applique en raison de son très faible poids, encaisse toutes les irrégularités de la surface de réception tout en exerçant une pression constante. De cette manière les inconvénients liés à la masse cumulée du moyen d'alimentation et de la buse sont annulés. Des formes préférentielles de l'invention font l'objet des revendications dépendantes.

La description qui suit s'appuie sur un mode de réalisation de l'invention et sur les figures 1 à 3 dans lesquelles :
- La figure 1 représente une vue schématique d'un dispositif selon l'art antérieur connu,
- La figure 2 représente une vue schématique d'une buse d'application conforme à l'invention,
- la figure 3 représente une vue schématique en coupe transversale selon D-D d'une buse selon l'invention,

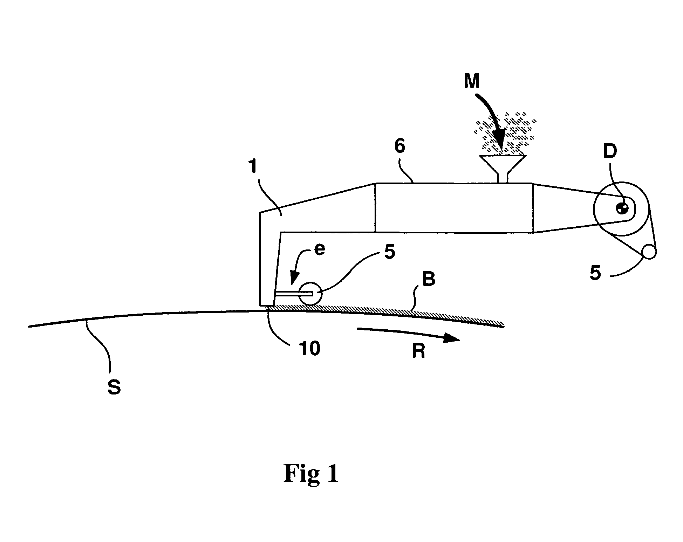

Le dispositif selon l'art antérieur connu représenté de manière schématique sur la figure 1 comprend un moyen d'alimentation6, dans lequel on introduit le matériau viscoélastique M, de manière à alimenter une buse 1 avec un débit et une pression d'alimentation donnée. La surface de réception S est en mouvement par rapport au dispositif d'application selon une direction R. Le mélange déposé sur la surface de réception forme une bandelette B. Un rouleau d'applique 5 peut être disposé en aval de l'orifice 10 de sortie du matériau. Dans ce dispositif, l'ensemble formé par la buse et le moyen d'alimentation 6 composent un ensemble solidaire et mobile autour d'un axe C sous l'action d'un moyen motorisé 5.

On remarquera l'espace e entre le rouleau et la sortie de la buse par lequel la bandelette est susceptible de s'échapper lorsque l'adhésion de la bandelette sur la surface de réception n'est pas achevée.

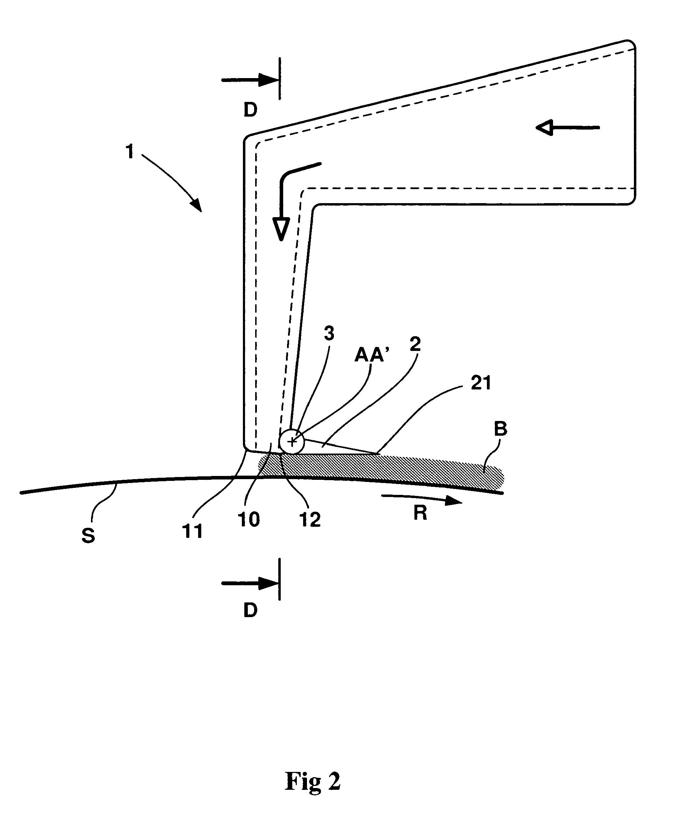

Le dispositif d'application représenté sur la figure 2, où seule la buse d'application est représentée, est relié à un moyen d'alimentation 6 dont le canal de sortie débouche dans la buse 1 de manière tout à fait similaire au montage illustré à la figure 1 et décrite aux paragraphes précédents.

Le sens de circulation du matériau viscoélastique à l'intérieur de la buse 1 est repéré par les flèches à pointes ajourées.

L'orifice 10 de la buse comprend une lèvre avant 11 et une lèvre arrière 12. Une palette d'applique 2 est reliée par une articulation 3 à la lèvre arrière de la buse. L'axe de l'articulation AA' est sensiblement parallèle à la surface de réception S et perpendiculaire à la direction R de progression de la surface de réception S par rapport à la buse 1.

Ladite articulation comporte un élément élastique permettant d'exercer un couple de rappel sur la palette d'applique, de sorte que la palette 2 exerce une pression d'application sur le dos de la bandelette B lorsque le dispositif est en fonctionnement.

L'élément élastique peut être formé par un ressort ou par tout autre moyen permettant d'exercer ledit couple de rappel. En pratique la force d'application est relativement modeste, et se situe dans une plage de l'ordre de 100 à 500 N, lorsque le matériau utilisé est du caoutchouc.

La palette d'applique peut être réalisée de sorte à constituer un élément rigide, ou, de manière préférentielle être réalisée à l'aide d'un matériau flexible de manière à lui conférer une certaine souplesse lorsque la palette d'applique exerce une pression sur le dos de la bandelette.

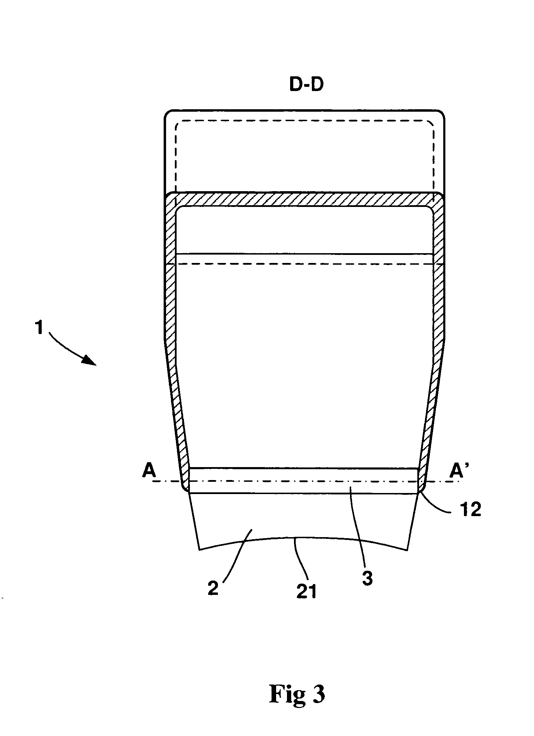

La figure 3 représente une coupe selon la direction DD de la buse d'application. On distingue la lèvre arrière 12, sur laquelle est fixée l'articulation élastique 3 qui supporte la palette d'applique 2.

Le bord arrière 21 de la palette d'applique peut utilement avoir une forme sensiblement concave, lorsque l'on regarde ladite palette en projection selon un plan perpendiculaire à la direction R, de sorte que la palette d'applique confère une forme lenticulaire à la bandelette.

On peut également prévoir des moyens de chauffage disposés sur la palette d'applique. En effet il peut s'avérer utile de chauffer ladite palette pour favoriser l'effet de lissage de la bandelette. A titre indicatif on régulera la température de la palette d'applique 2 de sorte que sa valeur soit supérieure à la température de sortie du matériau.

Le montage de la forme préférentielle de mise en oeuvre de l'invention décrit ci-dessus, est proposé ici à titre exemplatif, et s'illustre par sa compacité, sa légèreté et sa facilité d'assemblage, ce qui autorise un très bon suivi des irrégularités de la surface de réception.

Le dispositif décrit ci dessus est particulièrement bien adapté pour réaliser une ébauche de pneumatique par empilage de bandelettes. Par voie de conséquence, le matériau élastomérique sera de préférence de nature caoutchoutique. La surface de réception sera constituée par l'ébauche d'un pneumatique en cours de réalisation et dont la forme est généralement cylindrique ou toroïdale.

## Revendications

1. Dispositif (1) d'application d'une bandelette (B) d'un matériau viscoélastique sur une surface de réception (S) en mouvement relatif (R) par rapport au dit dispositif, comprenant un moyen d'alimentation (6) et une buse d'application (1) à l'extrémité de laquelle est disposé un orifice de sortie (10), ledit orifice de sortie comportant une lèvre avant (11) et une lèvre arrière (12),
**caractérisé en ce que** la lèvre arrière (12) est reliée à une palette d'applique (2) par l'intermédiaire d'une articulation élastique (3) d'axe AA', de sorte que, lorsque le dispositif (1) est en fonctionnement, ladite palette (2) exerce une pression sur le dos de la bandelette (B) dans le but de faire adhérer cette dernière sur la surface de réception (S).

2. Dispositif selon la revendication 1, dans lequel l'axe AA' de l'articulation élastique (3) est sensiblement parallèle à la surface de réception (S) et perpendiculaire à la direction R du mouvement relatif.

3. Dispositif selon la revendication 1 ou 2, dans lequel le bord arrière 21 de la palette d'applique (2) a une forme concave.

4. Dispositif selon la revendication 1 ou 2, dans lequel ladite palette d'applique (2) est formée à l'aide d'un matériau flexible.

5. Dispositif selon la revendication 2, dans lequel la palette d'applique (2) comporte des moyens de chauffage reliés à un moyen de régulation de la température.

## Claims

1. Device (1) for applying a strip (B) of a viscoelastic material to a receiving surface (S) in relative motion (R) with respect to the said device, comprising a feed means (6) and an application nozzle (1) at the end of which there is an outlet orifice (10), the said outlet orifice comprising a front lip (11) and a rear lip (12),
**characterized in that** the rear lip (12) is connected to an applicator palette (2) by an elastic articulated joint (3) of axis AA', so that, when the device (1) is functioning, the said palette (2) applies pressure to the back of the strip (B) with a view to causing the latter to adhere to the receiving surface (S).

2. Device according to Claim 1, in which the axis AA' of the elastic articulated joint (3) is substantially parallel to the receiving surface (S) and perpendicular to the direction (R) of the relative motion.

3. Device according to Claim 1 or 2, in which the rear edge (21) of the applicator palette (2) is of concave shape.

4. Device according to Claim 1 or 2, in which the said applicator palette (2) is formed using a flexible material.

5. Device according to Claim 2, in which the applicator palette (2) comprises heating means connected to a temperature regulating means.

## Patentansprüche

1. Vorrichtung (1) zum Aufbringen eines Streifens (B) eines viskoelastischen Materials auf eine bezüglich der Vorrichtung in relativer Bewegung (R) befindlichen Aufnahmefläche (S), die eine Zufuhreinrichtung (6) und eine Auftragdüse (1) enthält, an deren Ende eine Ausgangsöffnung (10) angeordnet ist, wobei die Ausgangsöffnung eine vordere Lippe (11) und eine hintere Lippe (12) aufweist,
**dadurch gekennzeichnet, dass** die hintere Lippe (12) mit einer Anlegplatte (2) über ein elastisches Gelenk (3) mit einer Achse AA' verbunden ist, so dass, wenn die Vorrichtung (1) in Betrieb ist, die Platte (2) einen Druck auf den Rücken des Streifens (B) ausübt, um letzteren auf der Aufnahmefläche (S) haften zu lassen.

2. Vorrichtung nach Anspruch 1, bei der die Achse AA' des elastischen Gelenks (3) im Wesentlichen parallel zur Aufnahmefläche (S) und lotrecht zur Richtung R der relativen Bewegung ist.

3. Vorrichtung nach Anspruch 1 oder 2, bei der der hintere Rand (21) der Anlegplatte (2) eine konkave Form hat.

4. Vorrichtung nach Anspruch 1 oder 2, bei der die Anlegplatte (2) mit Hilfe eines elastischen Materials geformt wird.

5. Vorrichtung nach Anspruch 2, bei der die Anlegplatte (2) Heizeinrichtungen aufweist, die mit einer Einrichtung zur Temperaturregelung verbunden sind.
